# EUROPEAN PATENT SPECIFICATION

(11) **EP 3 642 032 B1**
(45) Date of publication and mention of the grant of the patent: **05.11.2025**
(21) Application number: 17734662.4
(22) Date of filing: 19.06.2017
(51) Int. Cl.: B32B 27/08, B32B 27/32

(54) **MULTILAYER STRETCH FILM AND METHOD OF PRODUCING THE SAME**
MEHRSCHICHTIGE DEHNFOLIE UND VERFAHREN ZU IHRER HERSTELLUNG
FILM ÉTIRABLE MULTICOUCHE ET SON PROCÉDÉ DE FABRICATION

(43) Date of publication of application: 29.04.2020
(73) Proprietor: Trioworld Apeldoorn B.V., 7336 AZ Apeldoorn (NL)
(72) Inventor: BUIT, Marnix Elmar, 3823 TH Amersfoort (NL); ACHTEREEKTE, Frank Reinerus Johannes, 7433 EB Schalkhaar (NL); SCHUTTERT, Mathijs, 7731 ZT Ommen (NL)
(74) Representative: Arnold & Siedsma
(86) International application number: PCT/EP2017/064966
(87) International publication number: WO 2018/233807

(56) References cited:
- WO-A1-01/49487
- WO-A1-2004/060672
- WO-A1-2013/081742
- US-A- 5 976 682
- US-A1- 2009 087 648
- US-A1- 2013 095 338
- US-B1- 6 265 055

## Description

The invention relates to a stretch film, more specifically to a multilayer stretch film having improved properties over existing stretch films.

Such stretch films can be used to package goods, specifically to wrap goods placed or stacked on a pallet. During packaging and during transport the stretch film is exposed to certain forces which it should withstand. By way of example, a good stretch film should be resistant to puncture and tear and should have adequate tensile strength and elasticity.

When developing a stretch film there are several design requirements to be considered. For example, the stretch film should be able to exert a high force on the goods to be packaged, in order to wrap them tightly together. This "force on load" is an important design consideration or functional property of the stretch film. Another design requirement is that the stretch film provides a high "load stability". When subjected to accelerations or decelerations, e.g. during transport, the stacked goods should not slide off or tilt off the pallet, and after such acceleration or deceleration the stack of goods should preferably return to its original position and shape.

Another important design consideration is the amount of stretch or elongation that the film allows for. If the amount of stretch is high, a relatively long wrapping length is obtained for each unit length of film. Similarly, the stretch film should preferably have a relatively small amount of contraction in the transversal (i.e. width) direction when it is being stretched to wrap around goods to be packaged. When the film is stretched in lengthwise direction it will contract in both width direction and in thickness direction. If the contraction in width direction - the so-called "neck in" - is small, a relatively large surface may be covered by each length of film. Contraction in the thickness direction is, up to a certain point, desired. And finally, tear resistance under conditions of use is an important functional property of the stretch film. The film should still have a high tear resistance after it has been stretched during wrapping, i.e. in its stretched condition.

Cited document WO 01/49487 A1 discloses a multilayer, oriented, polymeric film and the method for its manufacture. The film comprises a first and second skin layer, and a core layer comprising polypropylene, a polymeric modifier, e.g., isotactic polypropylene, and a hydrocarbon resin, e.g., a saturated alicyclic resin. The disclosed method for manufacturing the film comprises steps of coextruding a first skin layer comprising a polymer, a core layer comprising polypropylene, a polymeric modifier, e.g., isotactic polypropylene, and a hydrocarbon resin, e.g., a saturated alicyclic resin, and a second skin layer comprising a polymer; stretching the film in the machine direction, e.g., at least about 5 times; and stretching the film in the transverse direction, e.g., from about 6 to about 10 times.

Cited document US 2013/095338 A1 discloses a multi-layer heat shrink film and a method of making the film comprising a core layer comprising at least one alpha-olefin copolymer selected from propylene-based elastomers, ethylene plastomers, metallocene catalyzed linear low density polyethylenes, and blends thereof, and an equal or lesser amount of a polypropylene having a melting point higher than alpha-olefin copolymer; at least one skin layer comprising a cyclic olefin copolymer (COC); and at least one tie layer between at least one skin layer and the core layer, the tie layer comprising a material or blend of soft materials having a Hardness (ISO 7619, Type A) of from 45 to 100; and a Tensile Strength (ISO 37) of from 10 MPa to 30 MPa.

Cited document US 5 976 682 A discloses polyolefin cling/slip stretch wrap films which are said to have superior load retention, elongation, tear resistance and puncture resistance properties and for the methods of using those stretch wrap films. The stretch wrap films are constructed in a multilayer fashion having an outside cling layer, an outside slip layer, at least one inside puncture resistant layer comprising a metallocene-catalyzed polyethylene resin, and at least one inside transverse direction tear resistant layer.

It is an object of the invention to provide a stretch film in which one or more functional properties are improved in comparison with existing stretch films, without affecting the other functional properties.

Throughout the application the term "improved functional properties" may mean an increased tear strength. Alternatively or additionally such improvements may include a reduced "neck-in", a higher resistance to puncture, or a higher maximum stretch or elongation.

Alternatively or additionally improved functional properties may comprise other advantageous characteristics which allow the stretch film to be used for packaging goods, such as a high "force on load", a high "load stability", a high consistency, less breakage per 1000 pallets and/or less breakage per roll of stretch film while wrapping pallets.

The object of the invention is achieved by a multilayer stretch film comprising a first skin layer; a second skin layer; at least one first inner layer disposed between the first skin layer and the second skin layer; and at least one second inner layer disposed between the first skin layer and the second skin layer, wherein the at least one first inner layer and/or the at least one second inner layer consists of one of: a polypropylene (PP) terpolymer; a polypropylene (PP) plastomer; a polypropylene-butene random copolymer; and wherein one of the skin layers is a cling layer and the other one of the skin layers is a slip layer.

The applicant has found that a stretch film including these materials in inner layers may show improved functional properties. A PP terpolymer may here mean any suitable polypropylene based terpolymer. A PP plastomer may here mean any suitable PP plastomer, more specifically all suitable plastomeric polypropylene polymers. A polypropylene-butene random copolymer may mean a random copolymer comprised of propylene and butene monomers. A stretch film comprising a slip layer may have improved functional properties. Additionally a slip layer may provide less cling then any other layer, specifically a slip layer may provide less cling then a cling layer. A multilayer stretch film having an outer slip layer may be wrapped around goods with its slip layer facing out, so that separately wrapped goods will not stick together.

The at least one first inner layer may comprise or consist of at least one of a polypropylene (PP) terpolymer; a polypropylene (PP) plastomer; a polypropylene-butene random copolymer. Additionally or alternatively the at least one second inner layer may comprise or consist of at least one of a polypropylene (PP) terpolymer; a polypropylene (PP) plastomer; a polypropylene-butene random copolymer.

In one embodiment of the multilayer stretch film, the at least one first inner layer may comprise or consist of a PP terpolymer and/or a polypropylene-butene random copolymer, and the at least one second microlayer may comprise or consist of a PP plastomer. Although the PP terpolymer and/or the polypropylene-butene random copolymer in the first inner layer(s) and the PP plastomer in the second inner layer(s) each provide improvements by themselves, the applicant found that the combination of these materials in the first and second microlayers has a greater effect than the sum of the individual improvements.

In another embodiment of the multilayer stretch film according to the invention the at least one first inner layer comprises at least 70% PP terpolymer by weight, preferably at least 80%, more preferably at least 90%, most preferably substantially 100%, or the at least one first inner layer comprises at least 70% polypropylene-butene random copolymer by weight, preferably at least 80%, more preferably at least 90%, most preferably substantially 100%, while the at least one second inner layer consists of one of a polypropylene (PP) terpolymer, a polypropylene (PP) plastomer, and a polypropylene-butene random copolymer.

Such an amount of PP terpolymer or polypropylene-butene random copolymer may improve performance of the stretch film. Such improvements may entail improved functional properties.

In yet another embodiment of the multilayer stretch film according to the invention the at least one second inner layer comprises at least 70% PP plastomer by weight, preferably at least 80%, more preferably at least 90%, most preferably substantially 100%.

Such an amount of PP plastomer may improve performance of the stretch film. Such improvements may entail improved functional properties.

In a further embodiment of the multilayer stretch film, the PP terpolymer may comprise polypropylene (PP), polyethylene (PE) and polybutene (PB). This combination of polyolefines has been found to yield improvements in the functional properties of the film.

In yet another embodiment of the multilayer stretch film according to the invention the multilayer stretch film has a thickness of between 10 µm and 100 µm, preferably between 12 µm and 50 µm, more preferably between 15 µm and 30 µm, most preferably of approximately 23 µm, while the at least one first inner layer consists of one of a polypropylene (PP) terpolymer, a polypropylene (PP) plastomer, and a polypropylene-butene random copolymer.

A film having such a thickness may have an appropriate thickness to provide sufficient strength whilst still being easy to handle. A thinner film may not provide sufficient strength, and a thicker film may involve an inefficient use of material and may not be able to be elastically extended by large enough amounts during wrapping of e.g. goods on a pallet.

The thickness of all the at least one first inner layers may be substantially equal, or the thickness of all the at least one first inner layers may differ. The thickness of all the at least one second inner layers may be substantially equal, or the thickness of all the at least one second inner layers may differ.

In yet another embodiment of the multilayer stretch film according to the invention the or each first inner layer has a thickness that is essentially equal to a thickness of the or each second inner layer.

The first and second inner layers being of the same thickness may balance their advantageous properties which may result in a film with improved functional properties.

Alternatively, the thickness of the or each first inner layer may be different from the thickness of the or each second inner layer. In particular, one of the first inner layer(s) and the second inner layer(s) may have a thickness that is approximately twice the thickness of the other of the first inner layer(s) and the second inner layer(s).

A thickness ratio of 1:2 between the first and second inner layers may result in the enhancement of one or more functional properties.

In yet another embodiment of the multilayer stretch film according to the invention the at least one first inner layer is a single layer and the at least one second inner layer is a single layer, and a core layer is disposed between the first inner layer and the second inner layer.

Alternatively the at least one first inner layer may be a single layer and the at least one second inner layer may be a single layer, wherein the first inner layer and the second inner layer are disposed at the same side of a core layer.

Such a layout of a multilayer stretch film may provide an adequate balance of bulk properties provided by the core layer, and the properties provided by the at least one first inner layers and/or the at least one second inner layer.

The use of a core layer may allow for a certain structural rigidity, whilst the inner layers adjacent the core or near the core, may provide additional desired characteristics, amongst which may be improved functional properties. The core layer may be an mLLDPE layer (metallocene Linear Low-Density Polyethylene). The core layer may be comprised of mLLDPE only.

Alternatively the core layer may be at least one core layer, e.g. there may be one or more than one core layer. Each core layer may separate first inner layer(s) and/or second inner layer(s).

In yet another embodiment of the multilayer stretch film according to the invention the first skin layer makes up between 2% and 20% of the thickness of the stretch film, preferably approximately 10%; the second skin layer makes up between 2% and 20% of the thickness of the stretch film, preferably approximately 10%; the first inner layer makes up between 15% and 30% of the thickness of the stretch film, preferably approximately 22%; the second inner layer makes up between 15% and 30% of the thickness of the stretch film, preferably approximately 22%; and the core layer makes up between 30% and 45% of the thickness of the stretch film, preferably approximately 36%.

A multilayer stretch film with such a layout may possess improved function properties. More specifically a multilayer stretch film with such a layout may provide an advantageous balance between the properties of the different layers. Alternatively or additionally a multilayer stretch film with such a layout may provide a synergistic effect between the different layers.

The slip layer may consist of mLLDPE and LDPE (Low-Density Polyethylene). The slip layer may consist of approximately 70% mLLDPE and approximately 30% LDPE. The slip layer may be disposed adjacent one of the at least one first inner layer and the at least one second inner layer. In other words there may be no other layers between the slip layer and one of the at least one first inner layer and the at least one second inner layer. Alternatively there may be other layers between the slip layer and one of the at least one first inner layer and the at least one second inner layer.

The cling layer may provide cling, more specifically the cling layer may make a layer of multilayer stretch film stick to another layer of multilayer stretch film so that the multilayer stretch film may be used for packaging e.g. goods on a pallet by wrapping the goods on the pallet with the cling layer facing inwards towards the goods to be wrapped.

The cling layer may comprise mLLDPE and a plastomer. More specifically the cling layer may comprise approximately 80% mLLDPE and approximately 20% of the plastomer. The plastomer may be any suitable type of plastomer.

In yet another embodiment of the multilayer stretch film according to the invention the multilayer stretch film has an Elmendorf tear strength in the machine direction according to ASTM 1922-94a of at least 90 kN/m, preferably at least 120 kN/m, more preferably at least 150 kN/m.

A multilayer stretch film with such a high Elmendorf tear strength in the machine direction may be especially suitable for packaging goods on a pallet.

In yet another embodiment of the multilayer stretch film according to the invention the multilayer stretch film has an Elmendorf tear strength in the transversal direction according to ASTM 1992-94a of at least 340 kN/m, preferably at least 380 kN/m, more preferably at least 410 kN/m.

A multilayer stretch film with such a high Elmendorf tear strength in the transversal direction may be especially suitable for packaging goods on a pallet.

In yet another embodiment of the multilayer stretch film according to the invention the multilayer stretch film further comprises at least one group of microlayers, in which group of microlayers: the at least one first inner layer makes up at least one first microlayer; and the at least one second inner layer makes up at least one second microlayer, wherein said at least one first microlayer and said at least one second microlayer are adjacent.

Such an at least one group of microlayers may provide an enlarged synergistic effect of microlayers and/or may distribute the properties of different layers along the thickness of the multilayer stretch film. Accordingly or alternatively such an at least one group of microlayers may improve functional properties of the multilayer stretch film.

There may be one group of microlayers, wherein one first microlayer and one second microlayer lie adjacent, i.e. flat upon each other. Alternatively there may be more than one such groups of microlayers, for instance two groups of microlayers. The groups of microlayers do not need to be identical, however they may be identical or mirrored.

In yet another embodiment the multilayer stretch film further comprises a plurality of first microlayers and a plurality of second microlayers, wherein the first and second microlayers are arranged in an interspersed fashion, preferably in an alternating fashion. In this way the properties of the various layers are distributed or preferably uniformly distributed. There may be an equal amount of first microlayers and second microlayers, or there may be one more or one less first microlayer than second microlayers in one such alternating arrangement of microlayers. Alternatively the number of first microlayers and the number of second microlayers may be different. There may be a plurality of first microlayers and/or a plurality of second microlayers in one group of microlayers, or in more than one group of microlayers.

In yet another embodiment of the multilayer stretch film according to the invention the multilayer stretch film comprises at least two groups of microlayers, separated by at least one core layer.

The use of a core layer may allow for a certain structural rigidity, whilst the two groups of microlayers adjacent the core, may provide additional desired characteristics, amongst which may be improved functional properties. The core layer may be an mLLDPE layer (metallocene Linear Low-Density Polyethylene). The core layer may be comprised of mLLDPE only.

The two groups of microlayers may be substantially equal to each other, or they may substantially be each others mirror image in a plane running through the core layer. Alternatively the two groups of microlayers may not be equal. There may be no other layers between the core layer and the groups of microlayers, or there may be one or more other layers between the core layer and the groups of microlayers. There may be more than two groups of microlayers, for instance there may be 3, 4, 5 or any other number of groups of microlayers. Each group of microlayers may in that case be separated from other groups of core layers by a core layer or some other layer.

In yet another embodiment of the multilayer stretch film according to the invention the multilayer stretch film further comprises: a first sub-skin layer disposed between the first skin layer and at least one group of microlayers; and a second sub-skin layer disposed between the second skin layer and at least one other group of microlayers.

The first and second sub-skin layers may provide an interface between the at least one group of microlayers and other layers. The first and second sub-skin layers may provide an increase in functional properties.

The multilayer stretch film may be built up of, from one side to the other, a first outer skin layer, possibly a cling layer, a first sub-skin layer, a first group of microlayers, a core layer, a second group of microlayers, a second sub-skin layer, a second outer skin layer, possibly a slip layer.

In yet another embodiment of the multilayer stretch film according to the invention the core layer, the first sub-skin layer and the second sub-skin layer are made of the same material.

The core layer and the sub-skin layers being made of the same material may provide ease of manufacturing.

In yet another embodiment of the multilayer stretch film according to the invention all the first microlayers combined make up at least 10% of a thickness of the stretch film, preferably at least 20%, more preferably at least 35%, most preferably 40%, and wherein all the second microlayers combined make up at least 10% of a thickness of the stretch film, preferably at least 20%, more preferably at least 35%, most preferably 40%.

Such a minimum amount of relative thickness covered by microlayers may exhibit advantageous properties of the resulting film, which may include increased functional properties.

As stated above, the plurality of first microlayers and the plurality of second microlayers may be disposed in groups of microlayers, wherein these groups of microlayers may or may not be of the same thickness.

In yet another embodiment of the multilayer stretch film according to the invention the at least one group of microlayers makes up at least 20% of a thickness of the stretch film, preferably at least 40%, more preferably at least 70%, most preferably at least 80%.

Such a minimum amount of relative thickness covered by microlayers may exhibit advantageous properties of the resulting film, which may include increased functional properties.

The at least one group of microlayers may be, as stated above, any number of groups of microlayers such as 1, 2, 3, 4, 5 or any other number of groups of microlayers that may or may not be of similar buildup and/or thickness.

In yet another embodiment of the multilayer stretch film according to the invention the first outer layer makes up between 2% and 20% of the thickness of the stretch film, preferably approximately 10%; the first microlayer or the plurality of first microlayers combined make(s) up between 20% and 40% of the thickness of the stretch film, preferably approximately 30%; the second microlayer or the plurality of second microlayers combined make(s) up between 20% and 40% of the thickness of the stretch film, preferably approximately 30%; the at least one core layer makes up between 10% and 30% of the thickness of the stretch film, preferably approximately 20%; and the second outer layer makes up between 2% and 20% of the thickness of the stretch film, preferably approximately 10%.

The applicant has found that such a multilayer stretch film produces exceptionally high operating capabilities such as a lower neck-in and a higher Elmendorf tear strength both in machine direction and in transversal direction.

In yet another embodiment of the multilayer stretch film according to the invention all microlayers combined make up at least 20% of a thickness of the film, preferably at least 40%, more preferably at least 70%, most preferably at least 80%; the first outer layer makes up between 2% and 20% of the thickness of the film, preferably between 5% and 10%, more preferably around 7.5%; the second outer layer makes up between 2% and 20% of the thickness of the film, preferably between 5% and 10%, more preferably around 7.5%; the at least one core layer makes up between 2% and 20% of the thickness of the film, preferably between 5% and 10%, more preferably around 7.5%; and the film comprises two sub-skin layers, wherein each sub-skin layer makes up between 1% and 10% of the thickness of the film, preferably between 2.5% and 5%, more preferably around 3.75%.

The applicant has found that such a multilayer stretch film produces exceptionally high operating capabilities such as a lower neck-in and a higher Elmendorf tear strength both in machine direction and in transversal direction.

In yet another embodiment of the multilayer stretch film according to the invention the multilayer stretch film comprises at least 10 first and second microlayers combined, preferably at least 22 microlayers, more preferably at least 20 first and 20 second microlayers, most preferably at least 46 first and second microlayers.

The applicant has noted that such an amount of microlayers may provide an advantageous balance between functional properties, which collectively may thereby be improved.

In the case of an even amount of first and second microlayers combined the first and second microlayers may be separated in two groups of equal amount of microlayers.

In the case of 46 first and second microlayers combined the first and second microlayers may be divided into two groups of in total 23 microlayers. The two groups of microlayers may have one first microlayer at their center and may have two outer second microlayers. Alternatively the two groups of microlayers may have one second microlayer at their center and may have two outer first microlayers.

In the case of an even number of microlayers per group of microlayers, the two outer microlayers of that group may be one first microlayer and one second microlayer.

In yet another embodiment of the multilayer stretch film according to the invention one of the or each first microlayer and the or each second microlayer has a thickness that is approximately twice the thickness of the other of the or each first microlayer and the or each second microlayer.

A thickness ratio of 2:1 between the first and second microlayers may result in the enhancement of one or more functional properties.

In yet another embodiment of the multilayer stretch film according to the invention the multilayer stretch film has an Elmendorf tear strength in the machine direction according to ASTM 1922-94a of at least 80 kN/m, preferably at least 90 kN/m, more preferably at least 100 kN/m.

A multilayer stretch film with such a high Elmendorf tear strength in the machine direction may be especially suitable for packaging goods on a pallet.

In yet another embodiment of the multilayer stretch film according to the invention the multilayer stretch film has an Elmendorf tear strength in the transversal direction according to ASTM 1922-94a of at least 300 kN/m, preferably at least 350 kN/m, more preferably at least 400 kN/m.

A multilayer stretch film with such a high Elmendorf tear strength in the transversal direction may be especially suitable for packaging goods on a pallet.

The invention also relates to a method of producing a multilayer stretch film, comprising the steps of:
a) providing starting materials to extruders; b) heating the starting materials; c) feeding the starting materials through a feedblock, in which the starting materials are combined into a strand; d) widening the strand by stretching the strand in a transversal, first direction using a mouthpiece; e) lengthening the widened strand by stretching the widened strand in a lengthwise, second direction using at least one roller, wherein the starting materials are laid out in layers by the feedblock, the group of layers comprising: at least one first inner layer; and at least one second inner layer; wherein the at least one first inner layer and/or the at least one second inner layer consists of one of: a polypropylene (PP) terpolymer; a polypropylene (PP) plastomer; a polypropylene-butene random copolymer, and wherein one of the skin layers is a cling layer and the other one of the skin layers is a slip layer.

Such a method is advantageous in that it provides a multilayer stretch film that may have improved functional properties.

The steps of the method may be performed in any suitable order.

The strand may have transversal dimensions of approximately 1 inch (0.025 m) by approximately 4 inch (0.1 m) upon exiting the feed block.

The widened strand may have transversal dimensions of approximately 1 mm (0.001 m) by 4650 mm (4.65 m). The smaller dimension of 1 mm may be called the thickness dimension, the larger dimension of 4650 mm may be called the width dimension.

The widened strand may be lengthened using the at least one roller, until the thickness of the widened strand has been reduced until anywhere between 10 µm and 100 µm, preferably between 12 µm and 50 µm , more preferably between 15 µm and 30 µm, most preferably however until the thickness has been reduced to approximately 23 µm.

Said at least one roller may rotate with a circumferential velocity that is larger then the velocity of the widened strand leaving the mouthpiece.

Said at least one roller may be cooled in order to cool the multilayer stretch film so that it may be rolled up for storage and/or transport.

In another embodiment of the method for producing a multilayer stretch film according to the invention, said at least one first inner layer comprises a polypropylene (PP) terpolymer and/or a polypropylene-butene random copolymer, and said at least one second inner layer comprises a polypropylene (PP) plastomer.

Such a method may provide a multilayer stretch film that has improved functional properties.

In yet another embodiment of the method for producing a multilayer stretch film according to the invention, at least 5 extruders are used, preferably at least 7 extruders, more preferably at least 9 extruders.

A method involving such an amount of extruders may allow for the production of a multilayer stretch film comprising as many different materials as there are extruders. A stretch film comprising more different materials may be advantageous in that it has improved functional properties.

In yet another embodiment of the method for producing a multilayer stretch film according to the invention the starting materials are heated to a temperature between 150°C and 350°C, preferably between 200°C and 300°C, more preferably between 250°C and 270°C.

Such a temperature may be especially suitable for the extrusion of the starting materials. More specifically, such a temperature may be low enough to avoid heating the starting materials past the melting point, whilst being high enough so that the starting materials soften and are still softened enough to be deformed by the mouthpiece and the at least one roller without being reheated.

The starting materials may become substantially solid at a temperature of 120°C.

In yet another embodiment of the method for producing a multilayer stretch film according to the invention the method has a throughput of 2000 kg/h to 3000 kg/h, preferably of 2250 kg/h to 2750 kg/h, more preferably around 2500 kg/h.

Such a throughput may be high enough for commercial production of multilayer stretch film whilst not exceeding stress limits on the extruders.

In yet anther embodiment of the method for producing a multilayer stretch film according to the invention the at least one first inner layer is a single layer and the at least one second inner layer is a single layer, and a core layer is disposed between the first inner layer and the second inner layer.

Such a method may provide a multilayer stretch film with increased operating capabilities and/or improved functional properties.

In yet another embodiment of the method for producing a multilayer stretch film according to the invention the at least one first inner layer is laid out in at least one first microlayer; and the at least one second inner layer is laid out in at least one second microlayer, wherein said at least one first microlayer and said at least one second microlayer are adjacent. More specifically the at least one first inner layer and the at least one second inner layer may be used to form at least one group of microlayers.

Such a method may provide a multilayer stretch film with increased operating capabilities and/or improved functional properties.

In yet another embodiment of the method for producing a multilayer stretch film according to the invention the starting materials are further laid out in a plurality of first microlayers and a plurality of second microlayers, wherein the first and second microlayers are being arranged in an interspersed fashion, preferably in an alternating fashion.

Dispersing or alternating the first and second microlayers may (evenly) distribute the properties of various layers.

In yet another embodiment of the method for producing a multilayer stretch film according to the invention, the starting materials are laid out in at least two groups of microlayers, separated by at least one core layer and in at least one sub-skin layer, which at least one sub-skin layer is disposed between an outer skin layer and the at least one group of microlayers, wherein the core layer and the at least one sub-skin layer are made of the same material.

The at least one sub-skin layer and the core layer being made of the same material may provide ease of manufacturing

In yet another embodiment of the method for producing a multilayer stretch film according to the invention, the starting materials are further laid out in a first outer layer and a second outer layer, and wherein: all microlayers combined make up at least 20% of a thickness of the film, preferably at least 40%, more preferably at least 70%, most preferably at least 80%; the first outer layer makes up between 2% and 20% of the thickness of the film, preferably between 5% and 10%, more preferably around 7.5%; the second outer layer makes up between 2% and 20% of the thickness of the film, preferably between 5% and 10%, more preferably around 7.5%; the at least one core layer makes up between 2% and 20% of the thickness of the film, preferably between 5% and 10%, more preferably around 7.5%; the film comprises two sub-skin layers, wherein each sub-skin layer makes up between 1% and 10% of the thickness of the film, preferably between 2.5% and 5%, more preferably around 3.75%.

A multilayer stretch film produced following such a method may provide exceptionally high operating capabilities such as a lower neck-in and a higher Elmendorf tear strength both in machine direction and in transversal direction.

The invention will be further elucidated with reference to the following figures, wherein:
Figure 1 illustrates a multilayer stretch film according to an example embodiment of the invention;
Figure 2 illustrates a multilayer stretch film according to another example embodiment of the invention;
Figure 3 illustrates an example of a group of microlayers that may be used in an embodiment of the invention;
Figure 4 illustrates a multilayer stretch film according to another example embodiment of the invention;
Figure 5 schematically illustrates extruders and a feedblock; and
Figure 6 schematically illustrates a feedblock in detailed cross sectional view.

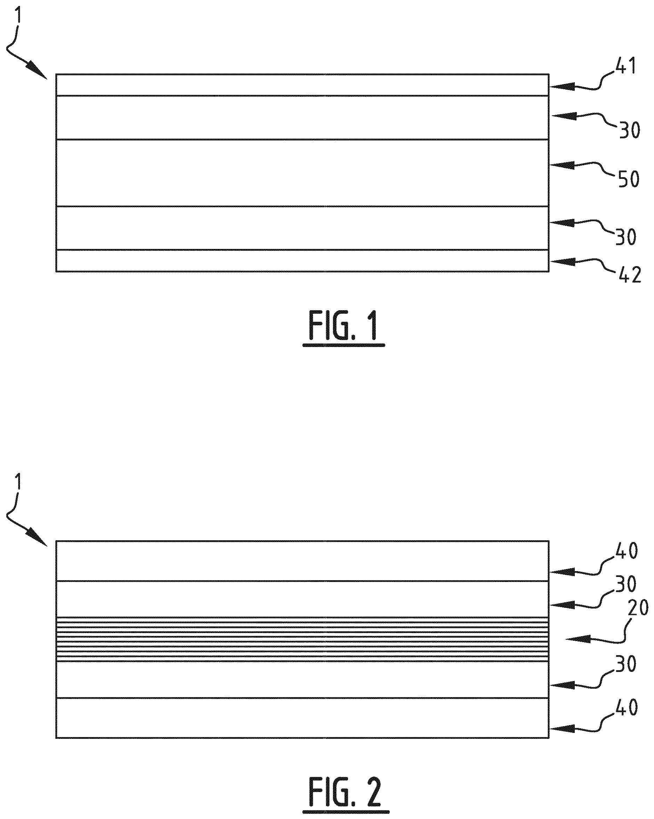

Figure 1 shows schematically a cross section of an example multilayer stretch film 1 which comprises a total of five distinct layers. The outer layers 41, 42 are also called skin layers. The outer layers are a cling layer 41 and a slip layer 42. It is however noted that in all cases, regardless of this embodiment, the cling layer 41 and the slip layer 42 may be interchanged. Further inwards of the skin layers 41, 42 the stretch film 1 includes two inner layers 30, separated by a core layer 50. The inner layers 30 may in this specific example be referred to as sub-skin layers 30. In this example embodiment the core layer 50, and the sub-skin layers 30 are made of the same material, for instance mLLDPE. In this specific example one sub-skin layer comprises or consists of a polypropylene (PP) terpolymer and/or a polypropylene-butene random copolymer, and the other sub-skin layer comprises or consists of a polypropylene (PP) plastomer.

Figure 2 shows schematically a cross section of an example multilayer stretch film 1 which in this case comprises a single group of microlayers 20. The single group of microlayers 20 is made up of a plurality of inner layers. This specific example multilayer stretch film has two sub-skin layers 30, which may or may not be comprised of the same material. The same specific example also includes two skin layers 40, one of which is a slip layer while the other is a cling layer, and which two skin layers 40 are different. The sub-skin layers 30 in between the skin layers 40 and the group of microlayers 20 may be layers providing strength and/or elasticity.

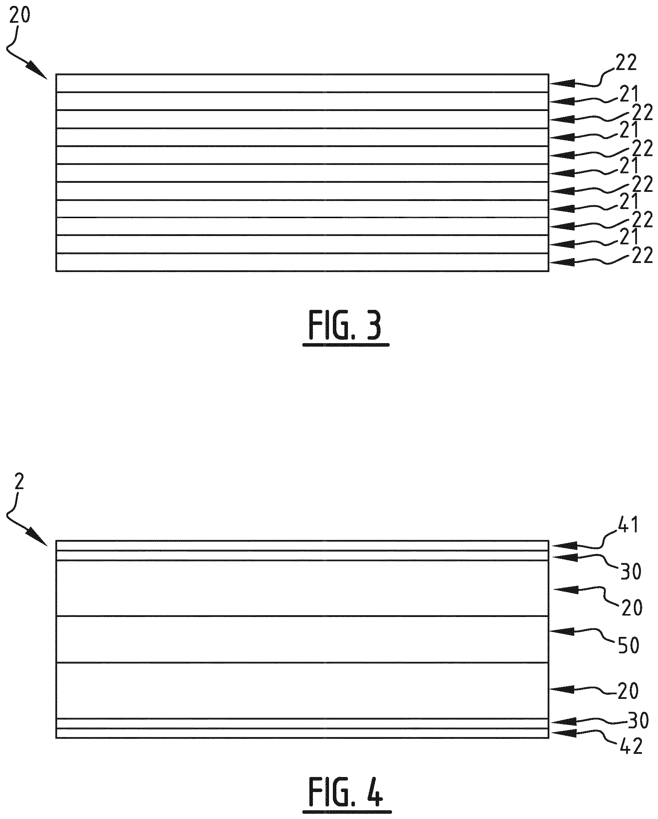

Figure 3 schematically illustrates a group of microlayers 20. This exemplary group consists of two different, alternating types of microlayers 21, 22. The alternating types of microlayers 21, 22 are inner layers. This specific example has a total of eleven microlayers of which five microlayers are of the first type 21 (the first microlayers) and six microlayers of the second type 22 (the second microlayers). Consequently, in this example the same type of microlayer - the second type - forms the outer microlayer on either side of the group of microlayers. In other embodiments of the invention the two outer layers may be of different type so that there is an even number of microlayers 21, 22 in the group of microlayers 20. In yet other embodiments microlayers of the first type 21 may be substituted by microlayers of the second type 22 and vice versa so that the two outer microlayers are of the first type 21. The total number of microlayers may vary.

Figure 4 schematically shows another example embodiment of the multilayer stretch film 2 according to the invention. The exemplary multilayer stretch film 2 comprises a core layer 50 that in this case is made entirely of mLLDPE. Directly adjacent on either side of the core layer 50 are two groups of microlayers 20. The groups of microlayers in this example each contain twenty-three microlayers in total. The microlayers are inner layers. The twenty-three microlayers consist of eleven first microlayers and twelve second microlayers that alternate each other. The first microlayers may be PP terpolymer layers and/or polypropylene-butene random copolymer and the second microlayers may be a PP plastomer or vice versa. The two groups of microlayers 20 are flanked by two sub-skin layers 30. The sub-skin layer in this example may be made of the same material as the core layer, i.e. mLLDPE. The sub-skin layers 30 are each flanked by a skin layer 41, 42. The first skin layer 41 is a cling layer. The cling layer 41 is comprised of approximately 80% mLLDPE and 20% of a suitable plastomer. The second skin layer 42 is a slip layer 42. The slip layers 42 in this case comprise approximately 70% mLLDPE and approximately 30% LLDPE. It is however noted that in all cases, regardless of this embodiment, the cling layer 41 and the slip layer 42 may be interchanged.

In this specific example multilayer stretch film 2 the cling layer 41 takes up approximately 7.5% of the thickness of the stretch film 2, the slip layer 42 also takes up approximately 7.5% of the thickness of the stretch film 2, the two groups of microlayers 20 take up approximately 70% of the thickness of the stretch film 2 together (approximately 35% per group of microlayers 20) and the core layer 50 takes up approximately 7.5% of the thickness of the stretch film 2. In this example the multilayer stretch film 2 has a total thickness of approximately 23 µm. In this specific example each microlayer in the groups of microlayers 20 has an equal thickness of approximately 0.35 µm.

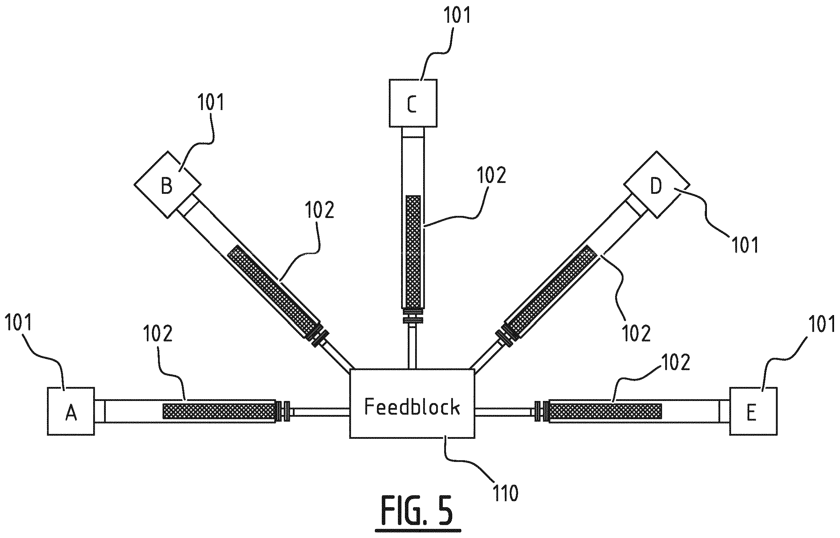

Figure 5 shows five extruders A, B, C, D, E comprised of a material reservoir sections 101 and a screwpump 102. The material reservoir sections 101 may be hoppers provided with heating means. The five extruders A, B, C, D, E feed material into feedblock 110. The extruders A, B, C, D, E may extrude different materials, or at least some of the extruders A, B, C, D, E may extrude the same material. There may be more extruders.

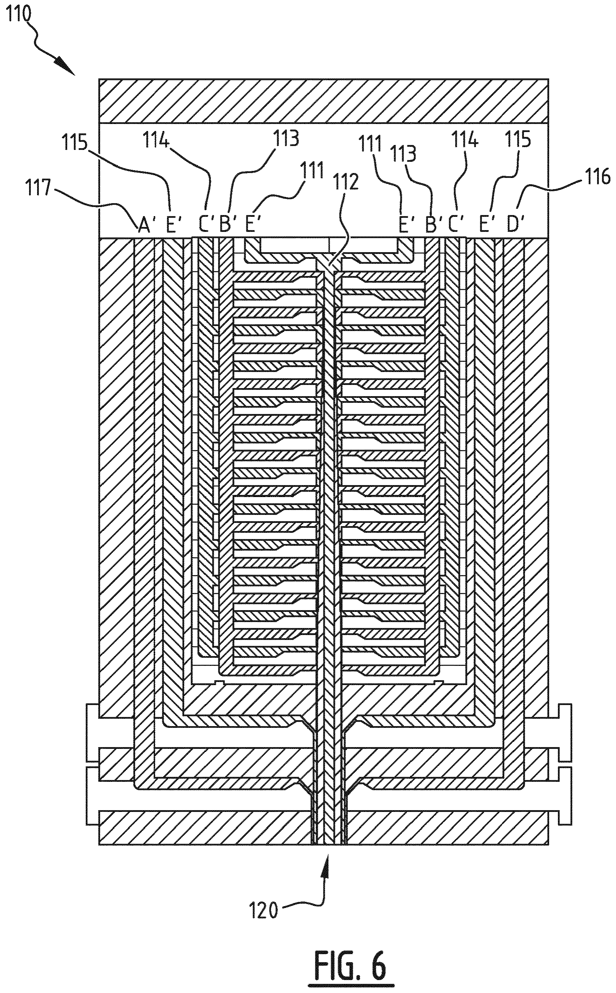

Figure 6 shows the feedblock 110 of Figure 5. The feedblock 110 comprises a plurality of inlets A', B', C', D', E' that correspond to the extruders A, B, C, D, E of Figure 4. One extruder A, B, C, D, E is connected to one or more inlets A', B', C', D', E'. The innermost inlets 111 provide a stream of material 112 at their outlets. The stream of material 112 eventually forms a core layer 50. The inlets 113, 114 are each connected to a manifold that provides material streams against the initial material stream 112. The manifold outputs streams that will eventually form microlayers i.e. inner layers, alternatingly stacked to form groups of microlayers 20 surrounding the core layer 50. Similarly the inlets 115, 116, 117 provide material streams against the groups of microlayers 20 to form sub-skin layers and skin layers. Inlets E' provide a material stream for the core layer 50 and for the sub-skin layers 30. Inlet A' and D' provide material streams for a slip layer 42 and a cling layer 41. It is however noted that in all cases, regardless of this embodiment, the cling layer 41 and the slip layer 42 may be interchanged. The resulting strand of material 120 comprises different layers of material and can be widened and stretched into a microlayer stretch film 1 according to claim 1 using methods known to one skilled in the art.

### EXAMPLE A

As an example of the present invention three multilayer stretch films were produced and compared with a reference stretch film. The multilayer stretch films were produced using the properties defined in the table below. The reference film is a multilayer stretch film that is commercially available and widely used.

All the films have a thickness of 23 µm. The example films comprise a total of 46 microlayers whereas the reference film comprises 22 microlayers (and additionally a core layer, two sub-skin layers, and two skin layers). The two types of microlayers alternate each other. The example films have a layout as shown in Figure 3.

The composition of microlayers was varied as shown in Table 1 below. Example 1 comprises microlayers consisting of PP terpolymer for 100% as opposed to the mLLDPE of the reference film. Example 2 comprises microlayers consisting of 100% PP plastomer as opposed to the 80% RcPP and 20% plastomer combination of the reference film. Example 3 comprises microlayers consisting of PP terpolymer for 100% as opposed to the mLLDPE of the reference film and microlayers consisting of 100% PP plastomer as opposed to the 80% RcPP and 20% plastomer combination of the reference film. Example 3 is therefore a combination of Example 1 and Example 2 with respect to the reference film.

The Examples 1 to 3 were tested and compared to the reference film in Table 2 below. All Examples show an increase in performance in the Elmendorf Tear strength. Example 3 shows an increase of 124% in machine direction in the Elmendorf Tear strength and 127% in the transversal direction.

### EXAMPLE B

As another example of the present invention three other multilayer stretch films were produced and compared with the same reference stretch film as in example I. The multilayer stretch films were produced using the properties defined in the table below.

All the films have a thickness of 23 µm. The example films comprise a total of five layers, much like the example embodiment of figure 1.

The composition of layers was varied as shown in Table 3 below. Example 4 comprises a sub-skin consisting of mLLDPE (as does the reference film) and a sub-skin of PP terpolymer. Example 5 comprises a sub-skin layer of mLLDPE and a sub-skin layer of a PP plastomer. Example 6 comprises a sub-skin layer of PP terpolymer and a sub-skin layer of PP plastomer. Example 6 is therefore a combination of Example 4 and Example 5 with respect to the reference film.

The Examples 4 to 6 were tested and compared to the reference film in Table 4 below. All Examples show an increase in performance in the Elmendorf Tear strength. Example 6 shows an increase of 182% in machine direction in the Elmendorf Tear strength and 131% in the transversal direction.

**Table 1 EXAMPLE A - Composition and structure of multilayer stretch films**

| **Experiment** | **Reference** | **Example 1** | **Example 2** | **Example 3** |
|---|---|---|---|---|
| **Number of microlayers** | 22 | 46 | 46 | 46 |
| **Composition of cling layer** | 80% mLLDPE, 20% plastomer | 80% mLLDPE, 20% plastomer | 80% mLLDPE, 20% plastomer | 80% mLLDPE, 20% plastomer |
| **Composition of microlayer A** | 100% mLLDPE | 100% PP terpolymer | 100% mLLDPE | 100% PP terpolymer |
| **Composition of microlayer B** | 80% RcPP, 20% plastomer | 100% mLLDPE | 100% PP plastomer | 100% PP plastomer |
| **Composition slip layer** | 70% mLLDPE, 30% LLDPE | 70% mLLDPE, 30% LLDPE | 70% mLLDPE, 30% LLDPE | 70% mLLDPE, 30% LLDPE |
| **Layer distribution (Cling/Microlayer A/Microlayer B/ Core/Slip) (%)** | 10/10/10/60/10 | 10/30/30/20/10 | 10/30/30/20/10 | 10/30/30/20/10 |
| **Thickness µm** | 23 | 23 | 23 | 23 |

**Table 2 EXAMPLE A - functional properties of multilayer stretch films**

| **Experiment** | **Reference** | **Example 1** | **Example 2** | **Example 3** |
|---|---|---|---|---|
| **Strength at break (MPa) D882-95a** | 65 | 56 | 65 | 66 |
| | 49 | 38 | 39 | 45 |
| - machine direction | | | | |
| - transversal direction | | | | |
| **Elongation (%) D882-95a** | 560 | 549 | 576 | 615 |
| | 748 | 734 | 746 | 777 |
| - machine direction | | | | |
| - transversal direction | | | | |
| **Elmendorf Tear strength (kN/m) D1922-94a** | 84 | 84 | 90 | **104** |
| | 317 | 348 | 343 | **402** |
| - machine direction | | | | |
| - transversal direction | | | | |
| **Highlight measurements** | 379 | 354 | 374 | 456 |
| | 34,2 | 36,4 | 32,3 | 39,8 |
| - ultimate stretch (%) | 5,5 | 5,1 | 6,1 | 4,5 |
| - stretch force at 200% stretch (kg) | | | | |
| - unwind force start (@200%) (kg) | | | | |

**Table 3 EXAMPLE B - Composition and structure of multilayer stretch films**

| **Experiment** | **Reference** | **Example 4** | **Example 5** | **Example 6** |
|---|---|---|---|---|
| **Number of micro/inner layers** | 22 | 5 | 5 | 5 |
| **Composition of cling layer** | 80% mLLDPE, 20% plastomer | 80% mLLDPE, 20% plastomer | 80% mLLDPE, 20% plastomer | 80% mLLDPE, 20% plastomer |
| **Composition of first inner layer** | 100% mLLDPE | 100% PP terpolymer | 100% mLLDPE | 100% PP terpolymer |
| **Composition of second inner layer** | 80% RcPP, 20% plastomer | 100% mLLDPE | 100% PP plastomer | 100% PP plastomer |
| **Composition slip layer** | 70% mLLDPE, 30% LLDPE | 70% mLLDPE, 30% LLDPE | 70% mLLDPE, 30% LLDPE | 70% mLLDPE, 30% LLDPE |
| **Layer distribution (Cling/first inner layer/second inner layer/ Core/Slip) (%)** | 10/10/10/60/10 | 10/22/22/36/10 | 10/22/22/36/10 | 10/22/22/36/10 |
| **Thickness µm** | 23 | 23 | 23 | 23 |

**Table 4, EXAMPLE B - functional properties of multilayer stretch films**

| **Experiment** | **Reference** | **Example 4** | **Example 5** | **Example 5** |
|---|---|---|---|---|
| **Strength at break (MPa) D882-95a** | 65 | 77 | 68 | 75 |
| | 49 | 49 | 49 | 51 |
| - machine direction | | | | |
| - transversal direction | | | | |
| **Elongation (%) D882-95a** | 560 | 570 | 554 | 557 |
| | 748 | 802 | 762 | 805 |
| - machine direction | | | | |
| - transversal direction | | | | |
| **Elmendorf Tear strength (kN/m) D1922-94a** | 84 | 96 | 161 | **153** |
| | 317 | 385 | 344 | **415** |
| - machine direction | | | | |
| - transversal direction | | | | |
| **Highlight measurements** | 379 | 327 | 342 | 353 |
| | 34,2 | 33,1 | 29,7 | 34,8 |
| - ultimate stretch (%) | 5,5 | 4,1 | 4,2 | 3,6 |
| - stretch force at 200% stretch (kg) | | | | |
| - unwind force start (@200%) (kg) | | | | |

## Claims

1. Multilayer stretch film (1) comprising:
- a first skin layer (41);
- a second skin layer (42);
- at least one first inner layer (30) disposed between the first skin layer (41) and the second skin layer (42); and
- at least one second inner layer (30) disposed between the first skin layer (41) and the second skin layer (42) ,
wherein the at least one first inner layer (30) and/or the at least one second inner layer (30) consists of one of:
a polypropylene (PP) terpolymer;
a polypropylene (PP) plastomer;
a polypropylene-butene random copolymer, and
wherein one of the skin layers is a cling layer and the other one of the skin layers is a slip layer.

2. Multilayer stretch film (1), according to claim 1, wherein the at least one first inner layer (30) comprises or consists of a polypropylene (PP) terpolymer and/or a polypropylene-butene random copolymer, and the at least one second inner layer (30) consists of a polypropylene (PP) plastomer, or
wherein the at least one first inner layer (30) consists of a polypropylene (PP) terpolymer and/or a polypropylene-butene random copolymer, and the at least one second inner layer (30) comprises or consists of a polypropylene (PP) plastomer.

3. Multilayer stretch film (1) according to claim 1 or 2, wherein:
- the at least one first inner layer (30) comprises at least 70% PP terpolymer by weight, preferably at least 80%, more preferably at least 90%, most preferably 100%, or wherein the at least one first inner layer (30) comprises at least 70% polypropylene-butene random copolymer by weight, preferably at least 80%, more preferably at least 90%, most preferably 100%, while the at least one second inner layer (30) consists of one of a polypropylene (PP) terpolymer, a polypropylene (PP) plastomer, and a polypropylene-butene random copolymer, and/or
- the at least one second inner layer (30) comprises at least 70% PP plastomer by weight, preferably at least 80%, more preferably at least 90%, most preferably 100%, while the at least one first inner layer (30) consists of one of a polypropylene (PP) terpolymer, a polypropylene (PP) plastomer, and a polypropylene-butene random copolymer.

4. Multilayer stretch film (1) according to any one of the preceding claims, wherein:
- the PP terpolymer comprises polypropylene (PP), polyethylene (PE) and polybutene (PB), and/or
- the multilayer stretch film (1) has a thickness between 10 µm and 100 µm, preferably between 12 µm and 50 µm , more preferably between 15 µm and 30 µm, most preferably of approximately 23 µm, and/or
- the at least one first inner layer (30) has a thickness that is essentially equal to a thickness of the at least one second inner layer (30).

5. Multilayer stretch film (1) according to any one of the preceding claims, wherein the at least one first inner layer (30) is a single layer and the at least one second inner layer (30) is a single layer, and wherein a core layer (50) is disposed between the first inner layer (30) and the second inner layer (30), and optionally
wherein:
- the first skin layer (41) makes up between 2% and 20% of the thickness of the stretch film (1), preferably approximately 10%;
- the second skin layer (42) makes up between 2% and 20% of the thickness of the stretch film (1), preferably approximately 10%;
- the first inner layer (30) makes up between 15% and 30% of the thickness of the stretch film (1), preferably approximately 22%;
- the second inner layer (30) makes up between 15% and 30% of the thickness of the stretch film (1), preferably approximately 22%; and
- the core layer (50) makes up between 30% and 45% of the thickness of the stretch film (1), preferably approximately 36%.

6. Multilayer stretch film (1) according to any one of the preceding claims wherein the multilayer stretch film (1) has:
- an Elmendorf tear strength in the machine direction according to ASTM 1922-94a of at least 90 kN/m, preferably at least 120 kN/m, more preferably at least 150 kN/m, and/or
- an Elmendorf tear strength in the transversal direction according to ASTM 1992-94a of at least 340 kN/m, preferably at least 380 kN/m, more preferably at least 410 kN/m.

7. Multilayer stretch film (1) according to any one of claims 1-4 or claim 6 as dependent on any of claims 1-4, further comprising at least one group (20) of microlayers, in which group (20) of microlayers:
- the at least one first inner layer (30) makes up at least one first microlayer (21); and
- the at least one second inner layer (30) makes up at least one second microlayer (22),
wherein said at least one first microlayer (21) and said at least one second microlayer (22) are adjacent, and optionally
further comprising a plurality of first microlayers (21) and a plurality of second microlayers (22), wherein the first and second microlayers (21, 22) are arranged in an interspersed fashion, preferably in an alternating fashion, and/or
comprising at least two groups (20) of microlayers, separated by at least one core layer (50), and optionally
further comprising:
- a first sub-skin layer disposed between the first skin layer (41) and at least one group (20) of microlayers; and
- a second sub-skin layer disposed between the second skin layer (42) and at least one other group (20) of microlayers, and optionally
wherein the core layer (50), the first sub-skin layer and the second sub-skin layer are made of the same material.

8. Multilayer stretch film (1) according to claim 7, wherein:
all the first microlayers (21) combined make up at least 10% of a thickness of the stretch film (1), preferably at least 20%, more preferably at least 35%, most preferably 40%, and wherein all the second microlayers (22) combined make up at least 10% of a thickness of the stretch film (1), preferably at least 20%, more preferably at least 35%, most preferably 40%, and/or
the at least one group (20) of microlayers makes up at least 20% of a thickness of the stretch film (1), preferably at least 40%, more preferably at least 70%, most preferably at least 80%, and optionally
wherein:
- the first outer layer makes up between 2% and 20% of the thickness of the stretch film (1), preferably approximately 10%;
- the first microlayer (21) or the plurality of first microlayers (21) combined make(s) up between 20% and 40% of the thickness of the stretch film (1), preferably approximately 30%;
- the second microlayer (22) or the plurality of second microlayers (22) combined make(s) up between 20% and 40% of the thickness of the stretch film (1), preferably approximately 30%;
- the at least one core layer (50) makes up between 10% and 30% of the thickness of the stretch film (1), preferably approximately 20%; and
- the second outer layer makes up between 2% and 20% of the thickness of the stretch film (1), preferably approximately 10%, and/or
wherein:
- all microlayers combined make up at least 20% of a thickness of the film, preferably at least 40%, more preferably at least 70%, most preferably at least 80%;
- the first outer layer makes up between 2% and 20% of the thickness of the film, preferably between 5% and 10%, more preferably around 7.5%;
- the second outer layer makes up between 2% and 20% of the thickness of the film, preferably between 5% and 10%, more preferably around 7.5%;
- the at least one core layer (50) makes up between 2% and 20% of the thickness of the film, preferably between 5% and 10%, more preferably around 7.5%; and
- the film comprises two sub-skin layers, wherein each sub-skin layer makes up between 1% and 10% of the thickness of the film, preferably between 2.5% and 5%, more preferably around 3.75%.

9. Multilayer stretch film (1) according to claim 7 or 8, wherein one or more of:
- the multilayer stretch film (1) comprises at least 10 first and second microlayers (21, 22) combined, preferably at least 22 microlayers, more preferably at least 20 first (21) and at least 20 second microlayers (22), most preferably at least 46 first and second microlayers (21, 22);
- one of the or each first microlayer (21) and the or each second microlayer (22) has a thickness that is approximately twice the thickness of the other of the or each first microlayer (21) and the or each second microlayer (22);
- the multilayer stretch film (1) has an Elmendorf tear strength in the machine direction according to ASTM 1922-94a of at least 80 kN/m, preferably at least 90 kN/m, more preferably at least 100 kN/m; and
- the multilayer stretch film (1) has an Elmendorf tear strength in the transversal direction according to ASTM 1922-94a of at least 300 kN/m, preferably at least 350 kN/m, more preferably at least 400 kN/m.

10. Method of producing a multilayer stretch film (1) according to any of the preceding claims, comprising the steps of:
a) providing starting materials to extruders (A, B, C, D, E);
b) heating the starting materials;
c) feeding the starting materials through a feedblock (110), in which the starting materials are combined into a strand (120);
d) widening the strand (120) by stretching the strand (120) in a transversal, first direction using a mouthpiece;
e) lengthening the widened strand (120) by stretching the widened strand (120) in a lengthwise, second direction using at least one roller,
wherein the starting materials are laid out in layers by the feedblock (110), the group of layers comprising:
- at least one first inner layer (30); and
- at least one second inner layer (30);
wherein the at least one first inner layer (30) and/or the at least one second inner layer (30) consists of one of:
a polypropylene (PP) terpolymer;
a polypropylene (PP) plastomer;
a polypropylene-butene random copolymer, and
wherein one of the skin layers is a cling layer and the other one of the skin layers is a slip layer..

11. Method according to claim 10, wherein said at least one first inner layer (30) comprises or consists of a polypropylene (PP) terpolymer and/or a polypropylene-butene random copolymer, and said at least one second inner layer (30) consists of a polypropylene (PP) plastomer, or
wherein said at least one first inner layer (30) consists of a polypropylene (PP) terpolymer and/or a polypropylene-butene random copolymer, and said at least one second inner layer (30) comprises or consists of a polypropylene (PP) plastomer.

12. Method according to claim 10 or 11, wherein:
- at least 5 extruders (A, B, C, D, E) are used, preferably at least 7 extruders (A, B, C, D, E), more preferably at least 9 extruders (A, B, C, D, E), and/or
- the starting materials are heated to a temperature between 150°C and 350°C, preferably between 200°C and 300°C, more preferably between 250°C and 270°C, and/or
- the method has a throughput of 2000 kg/h to 3000 kg/h, preferably of 2250 kg/h to 2750 kg/h, more preferably around 2500 kg/h.

13. Method according to claim 10, wherein the at least one first inner layer (30) is a single layer and the at least one second inner layer (30) is a single layer, and wherein a core layer (50) is disposed between the first inner layer (30) and the second inner layer (30).

14. Method according to claim 10, wherein:
- the at least one first inner layer (30) is laid out in at least one first microlayer (21); and
- the at least one second inner layer (30) is laid out in at least one second microlayer (22),
wherein said at least one first microlayer (21) and said at least one second microlayer (22) are adjacent.

15. Method according to claim 10 or 14, wherein the starting materials are further laid out in a plurality of first microlayers (21) and a plurality of second microlayers (22), wherein the first and second microlayers (21, 22) are being arranged in an interspersed fashion, preferably in an alternating fashion, optionally
wherein the starting materials are laid out in at least two groups (20) of microlayers, separated by at least one core layer (50) and in at least one sub-skin layer, which at least one sub-skin layer is disposed between an outer skin layer and the at least one group (20) of microlayers, wherein the core layer (50) and the at least one sub-skin layer are made of the same material, and optionally
wherein the starting materials are further laid out in a first outer layer and a second outer layer, and wherein:
- all microlayers combined make up at least 20% of a thickness of the film, preferably at least 40%, more preferably at least 70%, most preferably at least 80%;
- the first outer layer makes up between 2% and 20% of the thickness of the film, preferably between 5% and 10%, more preferably around 7.5%;
- the second outer layer makes up between 2% and 20% of the thickness of the film, preferably between 5% and 10%, more preferably around 7.5%;
- the at least one core layer (50) makes up between 2% and 20% of the thickness of the film, preferably between 5% and 10%, more preferably around 7.5%;
- the film comprises two sub-skin layers, wherein each sub-skin layer makes up between 1% and 10% of the thickness of the film, preferably between 2.5% and 5%, more preferably around 3.75%.

## Patentansprüche

1. Mehrschichtige Stretchfolie (1), umfassend:
- eine erste Hautschicht (41);
- eine zweite Hautschicht (42);
- mindestens eine erste Innenschicht (30), die zwischen der ersten Hautschicht (41) und der zweiten Hautschicht (42) angeordnet ist; und
- mindestens eine zweite Innenschicht (30), die zwischen der ersten Hautschicht (41) und der zweiten Hautschicht (42) angeordnet ist,
wobei die mindestens eine erste Innenschicht (30) und/oder die mindestens eine zweite Innenschicht (30) aus einem der folgenden Materialien besteht:
einem Polypropylen-Terpolymer (PP-Terpolymer);
einem Polypropylen-Plastomer (PP-Plastomer);
einem Polypropylen-Buten-Random-Copolymer, und
wobei eine der Hautschichten eine Haftschicht und die andere der Hautschichten eine Gleitschicht ist.

2. Mehrschichtige Stretchfolie (1) nach Anspruch 1, wobei die mindestens eine erste Innenschicht (30) ein Polypropylen-Terpolymer (PP-Terpolymer) und/oder ein Polypropylen-Buten-Random-Copolymer umfasst oder daraus besteht und die mindestens eine zweite Innenschicht (30) aus einem Polypropylen-Plastomer (PP-Plastomer) besteht, oder
wobei die mindestens eine erste Innenschicht (30) aus einem Polypropylen-Terpolymer (PP-Terpolymer) und/oder einem Polypropylen-Buten-Random-Copolymer besteht und die mindestens eine zweite Innenschicht (30) ein Polypropylen-Plastomer (PP-Plastomer) umfasst oder daraus besteht.

3. Mehrschichtige Stretchfolie (1) nach Anspruch 1 oder 2, wobei:
- die mindestens eine erste Innenschicht (30) mindestens 70 Gew.-% PP-Terpolymer umfasst, vorzugsweise mindestens 80 %, noch bevorzugter mindestens 90 %, am meisten bevorzugt 100 %, oder wobei die mindestens eine erste Innenschicht (30) mindestens 70 Gew.-% Polypropylen-Buten-Random-Copolymer umfasst, vorzugsweise mindestens 80 %, noch bevorzugter mindestens 90 %, am meisten bevorzugt 100 %, während die mindestens eine zweite Innenschicht (30) aus einem von einem Polypropylen (PP)-Terpolymer, einem Polypropylen (PP)-Plastomer und einem Polypropylen-Buten-Random-Copolymer besteht, und/oder
- die mindestens eine zweite Innenschicht (30) mindestens 70 Gew.-% PP-Plastomer umfasst, vorzugsweise mindestens 80 Gew.-%, noch bevorzugter mindestens 90 Gew.-%, am meisten bevorzugt 100 Gew.-%, während die mindestens eine erste Innenschicht (30) aus einem von einem Polypropylen-Terpolymer (PP-Terpolymer), einem Polypropylen-Plastomer (PP-Plastomer) und einem Polypropylen-Buten-Random-Copolymer besteht.

4. Mehrschichtige Stretchfolie (1) nach einem der vorstehenden Ansprüche, wobei:
- das PP-Terpolymer Polypropylen (PP), Polyethylen (PE) und Polybuten (PB) umfasst, und/oder
- die mehrschichtige Stretchfolie (1) eine Dicke zwischen 10 µm und 100 µm, vorzugsweise zwischen 12 µm und 50 µm, noch bevorzugter zwischen 15 µm und 30 µm, am meisten bevorzugt von etwa 23 µm aufweist, und/oder
- die mindestens eine erste Innenschicht (30) eine Dicke aufweist, die im Wesentlichen gleich einer Dicke der mindestens einen zweiten Innenschicht (30) ist.

5. Mehrschichtige Stretchfolie (1) nach einem der vorstehenden Ansprüche, wobei die mindestens eine erste Innenschicht (30) eine Einzelschicht ist und die mindestens eine zweite Innenschicht (30) eine Einzelschicht ist, und wobei eine Kernschicht (50) zwischen der ersten Innenschicht (30) und der zweiten Innenschicht (30) angeordnet ist, und optional wobei:
- die erste Hautschicht (41) zwischen 2 % und 20 % der Dicke der Stretchfolie (1) ausmacht, vorzugsweise etwa 10 %;
- die zweite Hautschicht (42) zwischen 2 % und 20 % der Dicke der Stretchfolie (1) ausmacht, vorzugsweise etwa 10 %;
- die erste Innenschicht (30) zwischen 15 % und 30 % der Dicke der Stretchfolie (1) ausmacht, vorzugsweise etwa 22 %;
- die zweite Innenschicht (30) zwischen 15 % und 30 % der Dicke der Stretchfolie (1) ausmacht, vorzugsweise etwa 22 %; und
- die Kernschicht (50) zwischen 30 % und 45 % der Dicke der Stretchfolie (1) ausmacht, vorzugsweise etwa 36 %.

6. Mehrschichtige Stretchfolie (1) nach einem der vorstehenden Ansprüche, wobei die mehrschichtige Stretchfolie (1) aufweist:
- eine Elmendorf-Reißfestigkeit in Maschinenrichtung gemäß ASTM 1922-94a von mindestens 90 kN/m, vorzugsweise mindestens 120 kN/m, noch bevorzugter mindestens 150 kN/m, und/oder
- eine Elmendorf-Reißfestigkeit in Querrichtung gemäß ASTM 1992-94a von mindestens 340 kN/m, vorzugsweise mindestens 380 kN/m, noch bevorzugter mindestens 410 kN/m.

7. Mehrschichtige Stretchfolie (1) nach einem der Ansprüche 1 bis 4 oder Anspruch 6, soweit dieser von einem der Ansprüche 1 bis 4 abhängig ist, ferner umfassend mindestens eine Gruppe (20) von Mikroschichten, wobei in der Gruppe (20) von Mikroschichten:
- die mindestens eine erste innere Schicht (30) mindestens eine erste Mikroschicht (21) bildet; und
- die mindestens eine zweite Innenschicht (30) mindestens eine zweite Mikroschicht (22) bildet, wobei die mindestens eine erste Mikroschicht (21) und die mindestens eine zweite Mikroschicht (22) benachbart sind, und optional
ferner umfassend eine Vielzahl von ersten Mikroschichten (21) und eine Vielzahl von zweiten Mikroschichten (22), wobei die ersten und zweiten Mikroschichten (21, 22) in einer durchsetzten Weise, vorzugsweise in einer abwechselnden Weise, angeordnet sind, und/oder umfassend mindestens zwei Gruppen (20) von Mikroschichten, die durch mindestens eine Kernschicht (50) getrennt sind, und optional
ferner umfassend:
- eine erste Unterhautschicht, die zwischen der ersten Hautschicht (41) und mindestens einer Gruppe (20) von Mikroschichten angeordnet ist; und
- eine zweite Unterhautschicht, die zwischen der zweiten Hautschicht (42) und mindestens einer anderen Gruppe (20) von Mikroschichten angeordnet ist, und optional wobei die Kernschicht (50), die erste Unterhautschicht und die zweite Unterhautschicht aus demselben Material hergestellt sind.

8. Mehrschichtige Stretchfolie (1) nach Anspruch 7, wobei:
wobei alle der ersten Mikroschichten (21) zusammen mindestens 10 % einer Dicke der Stretchfolie (1) ausmachen, vorzugsweise mindestens 20 %, noch bevorzugter mindestens 35 %, am meisten bevorzugt 40 %, und wobei alle der zweiten Mikroschichten (22) zusammen mindestens 10 % einer Dicke der Stretchfolie (1) ausmachen, vorzugsweise mindestens 20 %, noch bevorzugter mindestens 35 %, am meisten bevorzugt 40 %, und/oder
die mindestens eine Gruppe (20) von Mikroschichten mindestens 20 % einer Dicke der Stretchfolie (1) ausmacht, vorzugsweise mindestens 40 %, noch bevorzugter mindestens 70 %, am meisten bevorzugt mindestens 80 %, und optional
wobei:
- die erste Außenschicht zwischen 2 % und 20 % der Dicke der Stretchfolie (1) ausmacht, vorzugsweise etwa 10 %;
- die erste Mikroschicht (21) oder die Vielzahl von ersten Mikroschichten (21) zusammen zwischen 20 % und 40 % der Dicke der Stretchfolie (1) ausmacht/ausmachen, vorzugsweise etwa 30 %;
- die zweite Mikroschicht (22) oder die Vielzahl von zweiten Mikroschichten (22) zusammen zwischen 20 % und 40 % der Dicke der Stretchfolie (1) ausmacht/ausmachen, vorzugsweise etwa 30 %;
- die mindestens eine Kernschicht (50) zwischen 10 % und 30 % der Dicke der Stretchfolie (1) ausmacht, vorzugsweise etwa 20 %; und
- die zweite Außenschicht zwischen 2 % und 20 % der Dicke der Stretchfolie (1) ausmacht, vorzugsweise etwa 10 %, und/oder
wobei:
- alle Mikroschichten zusammen mindestens 20 % einer Dicke der Folie ausmachen, vorzugsweise mindestens 40 %, noch bevorzugter mindestens 70 %, am meisten bevorzugt mindestens 80 %;
- die erste Außenschicht zwischen 2 % und 20 % der Dicke der Folie ausmacht, vorzugsweise zwischen 5 % und 10 %, noch bevorzugter etwa 7,5 %;
- die zweite Außenschicht zwischen 2 % und 20 % der Dicke der Folie ausmacht, vorzugsweise zwischen 5 % und 10 %, noch bevorzugter etwa 7,5 %;
- die mindestens eine Kernschicht (50) zwischen 2 % und 20 % der Dicke der Folie ausmacht, vorzugsweise zwischen 5 % und 10 %, noch bevorzugter etwa 7,5 %; und
- die Folie zwei Unterhautschichten umfasst, wobei jede Unterhautschicht zwischen 1 % und 10 % der Dicke der Folie ausmacht, vorzugsweise zwischen 2,5 % und 5 %, noch bevorzugter etwa 3,75 %.

9. Mehrschichtige Stretchfolie (1) nach Anspruch 7 oder 8, wobei eines oder mehrere von Folgendem zutrifft/zutreffen:
- die mehrschichtige Stretchfolie (1) umfasst mindestens 10 kombinierte erste und zweite Mikroschichten (21, 22), vorzugsweise mindestens 22 Mikroschichten, noch bevorzugter mindestens 20 erste (21) und mindestens 20 zweite Mikroschichten (22), am meisten bevorzugt mindestens 46 erste und zweite Mikroschichten (21, 22);
- eine von der oder jeder ersten Mikroschicht (21) und der oder jeder zweiten Mikroschicht (22) weist eine Dicke auf, die etwa doppelt so groß ist wie die Dicke der anderen von der oder jeder ersten Mikroschicht (21) und der oder jeder zweiten Mikroschicht (22);
- die mehrschichtige Stretchfolie (1) weist eine Elmendorf-Reißfestigkeit in Maschinenrichtung gemäß ASTM 1922-94a von mindestens 80 kN/m, vorzugsweise mindestens 90 kN/m, noch bevorzugter mindestens 100 kN/m auf; und
- die mehrschichtige Stretchfolie (1) weist eine Elmendorf-Reißfestigkeit in Querrichtung gemäß ASTM 1922-94a von mindestens 300 kN/m, vorzugsweise mindestens 350 kN/m, noch bevorzugter mindestens 400 kN/m auf.

10. Verfahren zum Herstellen einer mehrschichtigen Stretchfolie (1) nach einem der vorstehenden Ansprüche, wobei das Verfahren die folgenden Schritte umfasst:
a) Bereitstellen von Ausgangsmaterialien für Extruder (A, B, C, D, E);
b) Erhitzen der Ausgangsmaterialien;
c) Zuführen der Ausgangsmaterialen durch einen Zuführblock (110), in dem die Ausgangsmaterialien zu einem Strang (120) zusammengeführt werden;
d) Aufweiten des Strangs (120) durch Dehnen des Strangs (120) in einer transversalen ersten Richtung unter Verwendung eines Mundstücks;
e) Verlängern des aufgeweiteten Strangs (120) durch Dehnen des aufgeweiteten Strangs (120) in einer länglichen zweiten Richtung unter Verwendung mindestens einer Walze, wobei die Ausgangsmaterialien durch den Zuführblock (110) in Schichten angelegt werden, wobei die Gruppe von Schichten Folgendes umfasst:
- mindestens eine erste Innenschicht (30); und
- mindestens eine zweite Innenschicht (30);
wobei die mindestens eine erste Innenschicht (30) und/oder die mindestens eine zweite Innenschicht (30) aus einem der folgenden Materialien besteht:
einem Polypropylen-Terpolymer (PP-Terpolymer);
einem Polypropylen-Plastomer (PP-Plastomer);
einem Polypropylen-Buten-Random-Copolymer, und
wobei eine der Hautschichten eine Haftschicht und die andere der Hautschichten eine Gleitschicht ist.

11. Verfahren nach Anspruch 10, wobei die mindestens eine erste Innenschicht (30) ein Polypropylen (PP)-Terpolymer und/oder ein Polypropylen-Buten-Random-Copolymer umfasst oder daraus besteht und die mindestens eine zweite Innenschicht (30) aus einem Polypropylen (PP)-Plastomer besteht, oder
wobei die mindestens eine erste Innenschicht (30) aus einem Polypropylen (PP)-Terpolymer und/oder einem Polypropylen-Buten-Random-Copolymer besteht und die mindestens eine zweite Innenschicht (30) ein Polypropylen (PP)-Plastomer umfasst oder daraus besteht.

12. Verfahren nach Anspruch 10 oder 11, wobei:
- mindestens 5 Extruder (A, B, C, D, E) verwendet werden, vorzugsweise mindestens 7 Extruder (A, B, C, D, E), noch bevorzugter mindestens 9 Extruder (A, B, C, D, E), und/oder
- die Ausgangsmaterialien auf eine Temperatur zwischen 150 °C und 350 °C, vorzugsweise zwischen 200 °C und 300 °C, noch bevorzugter zwischen 250 °C und 270 °C erhitzt werden, und/oder
- das Verfahren einen Durchsatz von 2000 kg/h bis 3000 kg/h, vorzugsweise von 2250 kg/h bis 2750 kg/h, noch bevorzugter etwa 2500 kg/h, aufweist.

13. Verfahren nach Anspruch 10, wobei die mindestens eine erste Innenschicht (30) eine Einzelschicht ist und die mindestens eine zweite Innenschicht (30) eine Einzelschicht ist, und wobei eine Kernschicht (50) zwischen der ersten Innenschicht (30) und der zweiten Innenschicht (30) angeordnet ist.

14. Verfahren nach Anspruch 10, wobei:
- die mindestens eine erste Innenschicht (30) in mindestens einer ersten Mikroschicht (21) angelegt wird; und
- die mindestens eine zweite Innenschicht (30) in mindestens einer zweiten Mikroschicht (22) angelegt wird,
wobei die mindestens eine erste Mikroschicht (21) und die mindestens eine zweite Mikroschicht (22) benachbart sind.

15. Verfahren nach Anspruch 10 oder 14, wobei die Ausgangsmaterialien weiterhin in einer Vielzahl von ersten Mikroschichten (21) und einer Vielzahl von zweiten Mikroschichten (22) angelegt werden, wobei die ersten und zweiten Mikroschichten (21, 22) in einer durchsetzten Weise, vorzugsweise in einer abwechselnden Weise, angeordnet werden, optional
wobei die Ausgangsmaterialien in mindestens zwei Gruppen (20) von Mikroschichten, die durch mindestens eine Kernschicht (50) getrennt sind, und in mindestens einer Unterhautschicht angelegt werden, wobei die mindestens eine Unterhautschicht zwischen einer äußeren Hautschicht und der mindestens einen Gruppe (20) von Mikroschichten angeordnet wird, wobei die Kernschicht (50) und die mindestens eine Unterhautschicht aus dem gleichen Material hergestellt sind, und optional
wobei die Ausgangsmaterialien ferner in einer ersten Außenschicht und einer zweiten Außenschicht angelegt werden, und wobei:
- alle Mikroschichten zusammen mindestens 20 % einer Dicke der Folie ausmachen, vorzugsweise mindestens 40 %, noch bevorzugter mindestens 70 %, am meisten bevorzugt mindestens 80 %;
- die erste Außenschicht zwischen 2 % und 20 % der Dicke der Folie ausmacht, vorzugsweise zwischen 5 % und 10 %, noch bevorzugter etwa 7,5 %;
- die zweite Außenschicht zwischen 2 % und 20 % der Dicke der Folie ausmacht, vorzugsweise zwischen 5 % und 10 %, noch bevorzugter etwa 7,5 %;
- die mindestens eine Kernschicht (50) zwischen 2 % und 20 % der Dicke der Folie ausmacht, vorzugsweise zwischen 5 % und 10 %, noch bevorzugter etwa 7,5 %;
- die Folie zwei Unterhautschichten umfasst, wobei jede Unterhautschicht zwischen 1 % und 10 % der Dicke der Folie ausmacht, vorzugsweise zwischen 2,5 % und 5 %, noch bevorzugter etwa 3,75 %.

## Revendications

1. Film (1) étirable multicouche comprenant :
- une première couche superficielle (41) ;
- une seconde couche superficielle (42) ;
- au moins une première couche interne (30) disposée entre la première couche superficielle (41) et la seconde couche superficielle (42) ; et
- au moins une seconde couche interne (30) disposée entre la première couche superficielle (41) et la seconde couche superficielle (42),
dans lequel la au moins une première couche interne (30) et/ou la au moins une seconde couche interne (30) est(sont) constituée(s) de l'un parmi :
un terpolymère de polypropylène (PP) ;
un plastomère de polypropylène (PP) ;
un copolymère aléatoire de polypropylène-butène, et
dans lequel l'une des couches superficielles est une couche autocollante et l'autre des couches superficielles est une couche glissante.

2. Film (1) étirable multicouche, selon la revendication 1, dans lequel la au moins une première couche interne (30) comprend ou est constituée d'un terpolymère de polypropylène (PP) et/ou d'un copolymère aléatoire de polypropylène-butène, et la au moins une seconde couche interne (30) est constituée d'un plastomère de polypropylène (PP), ou
dans lequel la au moins une première couche interne (30) est constituée d'un terpolymère de polypropylène (PP) et/ou d'un copolymère aléatoire de polypropylène-butène, et la au moins une seconde couche interne (30) comprend ou est constituée d'un plastomère de polypropylène (PP).

3. Film (1) étirable multicouche selon la revendication 1 ou 2, dans lequel :
- la au moins une première couche interne (30) comprend au moins 70 % en poids de terpolymère PP, de préférence au moins 80 %, plus préférablement au moins 90 %, le plus préférablement 100 %, ou dans lequel la au moins une première couche interne (30) comprend au moins 70 % en poids de copolymère aléatoire de polypropylène-butène, de préférence au moins 80 %, plus préférablement au moins 90 %, le plus préférablement 100 %, tandis que la au moins une seconde couche interne (30) est constituée de l'un parmi un terpolymère de polypropylène (PP), un plastomère de polypropylène (PP), et un copolymère aléatoire de polypropylène-butène, et/ou
- la au moins une seconde couche interne (30) comprend au moins 70 % en poids de plastomère PP, de préférence au moins 80 %, plus préférablement au moins 90 %, le plus préférablement 100 %, tandis que la au moins une première couche interne (30) est constituée de l'un parmi un terpolymère de polypropylène (PP), un plastomère de polypropylène (PP), et un copolymère aléatoire de polypropylène-butène.

4. Film (1) étirable multicouche selon l'une quelconque des revendications précédentes, dans lequel :
- le terpolymère PP comprend du polypropylène (PP), du polyéthylène (PE) et du poly-butène (PB), et/ou
- le film (1) étirable multicouche a une épaisseur comprise entre 10 µm et 100 µm, de préférence entre 12 µm et 50 µm, plus préférablement entre 15 µm et 30 µm, le plus préférablement d'environ 23 µm, et/ou
- la au moins une première couche interne (30) a une épaisseur qui est essentiellement égale à une épaisseur de la au moins une seconde couche interne (30).

5. Film (1) étirable multicouche selon l'une quelconque des revendications précédentes, dans lequel la au moins une première couche interne (30) est une couche simple et la au moins une seconde couche interne (30) est une couche simple, et dans lequel une couche centrale (50) est disposée entre la première couche interne (30) et la seconde couche interne (30), et optionnellement dans lequel :
- la première couche superficielle (41) représente entre 2 % et 20 % de l'épaisseur du film (1) étirable, de préférence environ 10 % ;
- la seconde couche superficielle (42) représente entre 2 % et 20 % de l'épaisseur du film (1) étirable, de préférence environ 10 % ;
- la première couche interne (30) représente entre 15 % et 30 % de l'épaisseur du film (1) étirable, de préférence environ 22 % ;
- la seconde couche interne (30) représente entre 15 % et 30 % de l'épaisseur du film (1) étirable, de préférence environ 22 % ; et
- la couche centrale (50) représente entre 30 % et 45 % de l'épaisseur du film (1) étirable, de préférence environ 36 %.

6. Film (1) étirable multicouche selon l'une quelconque des revendications précédentes, dans lequel le film (1) étirable multicouche a :
- une résistance à la déchirure Elmendorf dans la direction de machine selon la norme ASTM 1922-94a d'au moins 90 kN/m, de préférence d'au moins 120 kN/m, plus préférablement d'au moins 150 kN/m, et/ou
- une résistance à la déchirure Elmendorf dans la direction transversale selon la norme ASTM 1992-94a d'au moins 340 kN/m, de préférence d'au moins 380 kN/m, plus préférablement d'au moins 410 kN/m.

7. Film (1) étirable multicouche selon l'une quelconque des revendications 1 à 4 ou la revendication 6 dépendant de l'une quelconque des revendications 1 à 4, comprenant en outre au moins un groupe (20) de microcouches, dans le groupe (20) de microcouches :
- la au moins une première couche interne (30) constitue au moins une première microcouche (21) ; et
- la au moins une seconde couche interne (30) constitue au moins une seconde microcouche (22),
dans lequel ladite au moins une première microcouche (21) et ladite au moins une seconde microcouche (22) sont adjacentes, et optionnellement
comprenant en outre une pluralité de premières microcouches (21) et une pluralité de secondes microcouches (22), dans lequel les premières et secondes microcouches (21, 22) sont disposées de manière intercalée, de préférence de manière alternative, et/ou
comprenant au moins deux groupes (20) de microcouches, séparés par au moins une couche centrale (50), et optionnellement
comprenant en outre :
- une première couche sous-superficielle disposée entre la première couche superficielle (41) et au moins un groupe (20) de microcouches ; et
- une seconde couche sous-superficielle disposée entre la seconde couche superficielle (42) et au moins un autre groupe (20) de microcouches, et optionnellement
dans lequel la couche centrale (50), la première couche sous-superficielle et la seconde couche sous-superficielle sont faites du même matériau.

8. Film (1) étirable multicouche selon la revendication 7, dans lequel :
toutes les premières microcouches (21) combinées représentent au moins 10 % d'une épaisseur du film (1) étirable, de préférence au moins 20 %, plus préférablement au moins 35 %, le plus préférablement 40 %, et dans lequel toutes les secondes microcouches (22) combinées représentent au moins 10 % d'une épaisseur du film (1) étirable, de préférence au moins 20 %, plus préférablement au moins 35 %, le plus préférablement 40 %, et/ou
l'au moins un groupe (20) de microcouches représente au moins 20 % d'une épaisseur du film (1) étirable, de préférence au moins 40 %, plus préférablement au moins 70 %, le plus préférablement au moins 80 %, et optionnellement
dans lequel :
- la première couche externe représente entre 2 % et 20 % de l'épaisseur du film (1) étirable, de préférence environ 10 % ;
- la première microcouche (21) ou la pluralité de premières microcouches (21) combinées représentent entre 20 % et 40 % de l'épaisseur du film (1) étirable, de préférence environ 30 % ;
- la seconde microcouche (22) ou la pluralité de secondes microcouches (22) combinées représentent entre 20 % et 40 % de l'épaisseur du film (1) étirable, de préférence environ 30 % ;
- la au moins une couche centrale (50) représente entre 10 % et 30 % de l'épaisseur du film (1) étirable, de préférence environ 20 % ; et
- la seconde couche externe représente entre 2 % et 20 % de l'épaisseur du film (1) étirable, de préférence environ 10 %, et/ou
dans lequel :
- toutes les microcouches combinées représentent au moins 20 % d'une épaisseur du film, de préférence au moins 40 %, plus préférablement au moins 70 %, le plus préférablement au moins 80 % ;
- la première couche externe représente entre 2 % et 20 % de l'épaisseur du film, de préférence entre 5 % et 10 %, plus préférablement environ 7,5 % ;
- la seconde couche externe représente entre 2 % et 20 % de l'épaisseur du film, de préférence entre 5 % et 10 %, plus préférablement environ 7,5 % ;
- la au moins une couche centrale (50) représente entre 2 % et 20 % de l'épaisseur du film, de préférence entre 5 % et 10 %, plus préférablement environ 7,5 % ; et
- le film comprend deux couches sous-superficielles, dans lequel chaque couche sous-superficielle représente entre 1 % et 10 % de l'épaisseur du film, de préférence entre 2,5 % et 5 %, plus préférablement environ 3,75 %.

9. Film (1) étirable multicouche selon la revendication 7 ou 8, dans lequel l'un ou plusieurs de ce qui de suit sont présents :
- le film (1) étirable multicouche comprend au moins 10 premières et secondes microcouches (21, 22) combinées, de préférence au moins 22 microcouches, plus préférablement au moins 20 premières (21) et au moins 20 secondes microcouches (22), le plus préférablement au moins 46 premières et secondes microcouches (21, 22) ;
- l'une de la ou chaque première microcouche (21) et de la ou chaque seconde microcouche (22) a une épaisseur qui est environ deux fois plus grande que l'épaisseur de l'autre de la ou chaque première microcouche (21) et de la ou chaque seconde microcouche (22) ;
- le film (1) étirable multicouche a une résistance à la déchirure Elmendorf dans la direction de machine selon la norme ASTM 1922-94a d'au moins 80 kN/m, de préférence d'au moins 90 kN/m, plus préférablement d'au moins 100 kN/m ; et
- le film (1) étirable multicouche a une résistance à la déchirure Elmendorf dans la direction transversale selon la norme ASTM 1922-94a d'au moins 300 kN/m, de préférence d'au moins 350 kN/m, plus préférablement d'au moins 400 kN/m.

10. Procédé de production d'un film (1) étirable multicouche selon l'une quelconque des revendications précédentes, comprenant les étapes consistant à :
a) fournir des matières premières à des extrudeuses (A, B, C, D, E) ;
b) chauffer les matières premières ;
c) introduire les matières premières à travers un bloc d'alimentation (110), dans lequel les matières premières sont combinées en un brin (120) ;
d) élargir le brin (120) en étirant le brin (120) dans une première direction transversale à l'aide d'un embout ;
e) allonger le brin (120) élargi en étirant le brin (120) élargi dans une seconde direction longitudinale à l'aide d'au moins un rouleau,
dans lequel les matières premières sont disposées en couches par le bloc d'alimentation (110), le groupe de couches comprenant :
- au moins une première couche interne (30) ; et
- au moins une seconde couche interne (30) ;
dans lequel la au moins une première couche interne (30) et/ou la au moins une seconde couche interne (30) est(sont) constituée(s) de l'un parmi :
un terpolymère de polypropylène (PP) ;
un plastomère de polypropylène (PP) ;
un copolymère aléatoire de polypropylène-butène, et
dans lequel l'une des couches superficielles est une couche autocollante et l'autre des couches superficielles est une couche glissante.

11. Procédé selon la revendication 10, dans lequel ladite au moins une première couche interne (30) comprend ou est constituée d'un terpolymère de polypropylène (PP) et/ou d'un copolymère aléatoire de polypropylène-butène, et ladite au moins une seconde couche interne (30) est constituée d'un plastomère de polypropylène (PP), ou
dans lequel ladite au moins une première couche interne (30) est constituée d'un terpolymère de polypropylène (PP) et/ou d'un copolymère aléatoire de polypropylène-butène, et ladite au moins une seconde couche interne (30) comprend ou est constituée d'un plastomère de polypropylène (PP).

12. Procédé selon la revendication 10 ou 11, dans lequel :
- au moins 5 extrudeuses (A, B, C, D, E) sont utilisées, de préférence au moins 7 extrudeuses (A, B, C, D, E), plus préférablement au moins 9 extrudeuses (A, B, C, D, E), et/ou
- les matières premières sont chauffées à une température comprise entre 150 °C et 350 °C, de préférence entre 200 °C et 300 °C, plus préférablement entre 250 °C et 270 °C, et/ou
- le procédé a un débit de 2 000 kg/h à 3 000 kg/h, de préférence de 2 250 kg/h à 2 750 kg/h, plus préférablement d'environ 2 500 kg/h.

13. Procédé selon la revendication 10, dans lequel la au moins une première couche interne (30) est une couche simple et la au moins une seconde couche interne (30) est une couche simple, et dans lequel une couche centrale (50) est disposée entre la première couche interne (30) et la seconde couche interne (30).

14. Procédé selon la revendication 10, dans lequel :
- la au moins une première couche interne (30) est disposée dans au moins une première microcouche (21) ; et
- la au moins une seconde couche interne (30) est disposée dans au moins une seconde microcouche (22) ;
dans lequel ladite au moins une première microcouche (21) et ladite au moins une seconde microcouche (22) sont adjacentes.

15. Procédé selon la revendication 10 ou 14, dans lequel les matières premières sont en outre disposés dans une pluralité de premières microcouches (21) et une pluralité de secondes microcouches (22), dans lequel les premières et secondes microcouches (21, 22) sont disposées de manière intercalée, de préférence de manière alternative, optionnellement dans lequel les matières premières sont disposés en au moins deux groupes (20) de microcouches, séparés par au moins une couche centrale (50) et en au moins une couche sous-superficielle, la au moins une couche sous-superficielle est disposée entre une couche superficielle externe et l'au moins un groupe (20) de microcouches, dans lequel la couche centrale (50) et la au moins une couche sous-superficielle sont faites du même matériau, et optionnellement dans lequel les matières premières sont en outre disposées en une première couche externe et une seconde couche externe, et dans lequel :
- toutes les microcouches combinées représentent au moins 20 % d'une épaisseur du film, de préférence au moins 40 %, plus préférablement au moins 70 %, le plus préférablement au moins 80 % ;
- la première couche externe représente entre 2 % et 20 % de l'épaisseur du film, de préférence entre 5 % et 10 %, plus préférablement environ 7,5 % ;
- la seconde couche externe représente entre 2 % et 20 % de l'épaisseur du film, de préférence entre 5 % et 10 %, plus préférablement environ 7,5 % ;
- la au moins une couche centrale (50) représente entre 2 % et 20 % de l'épaisseur du film, de préférence entre 5 % et 10 %, plus préférablement environ 7,5 % ;
- le film comprend deux couches sous-superficielles, dans lequel chaque couche sous-superficielle représente entre 1 % et 10 % de l'épaisseur du film, de préférence entre 2,5 % et 5 %, plus préférablement environ 3,75 %.
